(19) Europäisches Patentamt
European Patent Office
Office européen des brevets

(11) Publication number: **0 113 687**
**B1**

(12) # EUROPEAN PATENT SPECIFICATION

(45) Date of publication of patent specification: **29.04.87**

(51) Int. Cl.$^4$: **C 05 C 1/02,** C 05 G 3/00, B 01 J 2/30

(21) Application number: **84200024.2**

(22) Date of filing: **06.01.84**

(54) **Ammonium nitrate containing fertilizer granules and coating mixture therefor.**

(30) Priority: **06.01.83 NL 8300043**

(43) Date of publication of application:
**18.07.84 Bulletin 84/29**

(45) Publication of the grant of the patent:
**29.04.87 Bulletin 87/18**

(84) Designated Contracting States:
**AT BE DE FR GB IT NL SE**

(56) References cited:
**FR-A-2 090 752**
**FR-A-2 339 663**
**FR-A-2 460 706**
**US-A-3 306 728**

**RESEARCH DISCLOSURE, Janaury 1980, page 31, no. 18933 "Anti-caking products for treating pulverulent substances such as fertilizers"**

(73) Proprietor: **Nederlandse Stikstof Maatschappij B.V.**
**Industrieweg 10**
**NL-4541 HJ Sluiskil (NL)**

(72) Inventor: **Goethals, Rafael A.**
**Jacop van Arteveldelaan 16**
**B-9068 Ertvelde (BE)**
Inventor: **Vercruisse, Hubert R.**
**Meelstraat 14**
**B-9960 Assenede (BE)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

**EP 0 113 687 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to ammonium nitrate containing fertilizer granules having improved properties during bulk storage.

The increasing tendency of transporting and storing granular fertilizers in bulk, also to and in tropical regions, imposes particular requirements on the properties of the granules, which some fertilizers do not by nature satisfy. Thus one requirement is that, under humid conditions, the absorption of moisture by the granules should be low, and that under varying conditions of temperature and degree of humidity of the ambient atmosphere, the moisture absorbed does not lead to caking of the granules and the formation of a crust. Ammonium nitrate containing fertilizer granules do not naturally satisfy these requirements. When such granules are stored in bulk in a humid atmosphere, the granules lying at the surface of the pile readily absorb moisture, which gradually penetrates the pile more deeply, so that a wet top layer is formed. Depending on climatological circumstances and the duration, this wet top layer may acquire a thickness of 5 to 80 cm. Variations in the temperature and degree of humidity of the ambient atmosphere result in the granules in the wet top layer becoming caked together and partly losing their structure, so that the wet top layer ultimately becomes a stone-hard crust.

US patent 4,150,965 discloses ammonium nitrate containing fertilizer granules provided throughout their entire surface with a uniform and substantially closed coating of $C_{12}$—$C_{18}$ alkylamine(s) in the solid state and with a thin overlayer of mineral oil. The granules thus coated exhibit a greatly reduced caking tendency, considerably improved bulk storage properties under moist conditions, and such an increased resistance to the formation of dust when the granules rub together that the product is completely dust-free. The patent shows (Example 4) that when the granules thus coated are stored in bulk under humid conditions a thin wet top layer is formed in the pile owing to the absorption of moisture, which wet top layer may, in time, dry up to form a crust, but that under this top layer or crust the granules remain free flowing. Practice has shown that when the granules described in the above US patent are stored in bulk for long periods of time under conditions of high humidity, the wet top layer may get a thickness of at most some centimeters, and in drier periods dries up to form a hard crust.

It is an object of the present invention to provide ammonium nitrate containing fertilizer granules coated in such a manner that the granules have the same favourable properties as the granules described in US patent 4,150,965, i.e., that they are dust-free and have a negligible tendency of caking together, but in addition have the advantageous property, unlike the granules of the prior art, that when stored in bulk under conditions of high humidity at the worst a thin wet top layer or soft crust is formed in the pile.

The ammonium nitrate containing fertilizer granules according to the invention are characterized in that the granules are coated with 0.005—0.15% by weight of a homogeneous mixture of

(a) 5—30% by weight of the product produced by at least partial neutralization of one or more amines having the formula

$$R_1—N\begin{matrix} / (R_2O)_{n1}—H \\ \backslash (R_2O)_{n1}—H \end{matrix}$$

in which $R_1$ represents an alkyl or alkenyl group having 12—20 C atoms, $R_2$ an alkylene group having 2—4 C atoms and $n_1$ a number having a value of from 0 to 15, with one or more acid phosphate esters,

(b) 25—70% by weight of mineral oil,

(c) 10—50% by weight of coarsely-crystalline paraffin wax, and

(d) 5—25% by weight of microcrystalline paraffin wax.

In component (a) the neutralizing agent preferably comprises one or more acid phosphate esters having the formula

$$O{=}P\begin{matrix} / O—(R_3O)_{n2}—R_4 \\ —O—(R_3O)_{n2}—R_5 \\ \backslash O—(R_3O)_{n2}—R_6 \end{matrix}$$

wherein $R_3$ represents an alkylene group having 2—4 C atoms, one of the substituents $R_4$, $R_5$, $R_6$ is a hydrogen atom, one of the substituents $R_4$, $R_5$, $R_6$ an alkyl group having 4—12 C atoms, or an alkylaryl group having 8—12 C atoms in the alkyl group, one of the substituents $R_4$, $R_5$, $R_6$ is a hydrogen atom, an alkyl group having 4—12 C atoms or an alkylaryl group having 8—12 C atoms in the alkyl group, and $n_2$ a number having a value of from 0—15. Generally speaking, the amine should be neutralized as to at least 30% by weight. Preferably it is neutralized as to at least 40% by weight.

Preferably, the coating mixture comprises 10—20% by weight of component (a), 35—55% by weight of component (b), 20—40% by weight of component (c), and 10—15% by weight of component (d). The

proportion of coating mixture is preferably 0.01—0.1% by weight, in particular 0.03—0.07% by weight, calculated on the non-coated granules.

The invention also relates to a coating mixture for coating ammonium nitrate containing fertilizer granules, said mixture being characterized by comprising 5—30% by weight, preferably 10—20% by weight, of component (a), 25—70% by weight, preferably 35—55% by weight, of component (b), 10—50% by weight, preferably 20—40% by weight, of component (c), and 5—25% by weight, preferably 10—15% by weight, of component (d).

The invention further encompasses mixtures of components (a), (c) and (d) in such proportions, that the addition of 25—70% by weight of component (b), calculated on the total quantity of (a), (b), (c) and (d) results in a coating mixture according to the invention. Such mixtures can be marketed as such. From them the user can prepare a coating mixture according to the invention in a simple manner by adding a suitable amount of mineral oil.

It has been found that the amount of moisture absorbed by a pile of ammonium nitrate containing fertilizer granules from the atmosphere is very greatly reduced by the coating according to the invention. For measuring the absorption of moisture, a standard test was developed, in which 3 kg of product was kept in a plastics container of 20×20×7 cm for 3 days in a space with a constant temperature of 20°C and a constant relative humidity of 80%, whereafter the amount of moisture absorbed is determined by weighing. In this manner a number of commercial products of the calcium ammonium nitrate 26%N and ammonium nitrate 33.5% N types of different origins was examined. In the following table, the amounts of moisture are indicated for the products examined, numbered according to origin from 1 to 11, as the moisture absorption index (M.A. index), i.e., the amount of moisture absorbed as a percentage of the amount absorbed by a reference product (=100%). Selected as a reference product was calcium ammonium nitrate 26% N of N.S.M. (Nederlandse Stikstof Maatschappij or Compagnie Néerlandaise de l'Azote). The N.S.M. products designated A and B in the table were coated with a coating mixture according to the present invention.

Coating mixture A is a mixture of

15% by weight of amine derivative produced by neutralizing a condensation product of stearylamine with 2 moles ethylene oxide with the phosphate ester of a mixture of 50% by weight of 2-ethylhexanol and 50% by weight of nonylphenol, ethoxylated with 8 moles of ethylene oxide

42.5% by weight of mineral oil

30.3% by weight of coarsely-crystalline paraffin wax

12.2% by weight of microcrystalline paraffin wax.

Coating mixture B contains 15% by weight of an amine derivative produced by neutralizing the condensation product of stearylamine with 2 moles of ethylene oxide with a mixture of equimolar quantities of the phosphate monoester and the phosphate diester of 2-ethylhexanol, and further has the same formulation as mixture A.

| | M.A. index % | Moistened top layer | |
|---|---|---|---|
| | | Thickness (cm) | Hardness (kg/cm$^2$) |
| Calcium ammonium nitrate 26% N | | | |
| product 1 (N.S.M.) | 100 | <1 | deliquesced |
| product 2 | 96 | 6 | >5 |
| product 3 | 111 | 6 | >5 |
| product 4 | 107 | 4 | >5 |
| product 5 | 117 | 6 | 0.6 |
| product 6 | 97 | 6 | 5 |
| product 7 | 101 | 6 | 1.7 |
| N.S.M. A (invention) | 30 | 1 | soft |
| N.S.M. B (invention) | 30 | 1 | soft |
| Ammonium nitrate 33.5% N | | | |
| N.S.M. | 113 | 1 | deliquesced |
| product 8 | 104 | 6 | 1.0 |
| product 9 | 108 | 6 | 3.0 |
| product 10 | 98 | 6 | 0.5 |
| product 11 | 118 | 6 | >5 |
| N.S.M. A (invention) | 56 | 2.5 | soft |
| N.S.M. B (invention) | 63 | 2.5 | soft |

This table shows that the difference in moisture absorption by the commercial products of the same type of fertilizer is not significant, but that such moisture absorption is drastically reduced by the coating according to the present invention to far below the lowest value measured with commercial products, and that the moisture absorption of ammonium nitrate stabilized with magnesium nitrate, and as a result highly hydroscopic, is reduced by the coating according to the invention to 50—60% of the moisture absorption of calcium ammonium nitrate 26% N, which is known to be much less hydroscopic. In the case of the products according to the invention, a soft top layer was formed, which had only a small thickness.

Fertilizer granules that can be provided with the coating according to the invention may consist of ammonium nitrate, or of mixtures thereof with fillers, such as limestone or dolomite, for example, 28—35% N ammonium nitrate prills and granules, 20.5—23% N and 26% N calcium ammonium nitrate prills and granules, mixtures of ammonium nitrate with the same fillers and with magnesium sulphate, for example, 20.5% N magnesamon, binary mixtures of ammonium nitrate and ammonium and calcium phosphates, for example, a mixture of monoammonium phosphate and ammonium nitrate (e.g. 20—20—0 and 23—23—0) and ternary mixtures of ammonium nitrate, phosphates, and potassium salts, possibly supplemented with other plant nutrients.

Amine derivatives suitable for use in the coating mixture according to the invention are those derived from primary alkylamines and/or alkenylamines, in which the amino group is terminal and the alkyl and/or alkenyl group contains 12—20 C atoms, preferably in a straight chain, for example, cetylamine, stearylamine and oleylamine, or mixtures of such amines, such as technical-grade octadecylamine, which contains approximately 65% $C_{18}$ alkylamine, approximately 30% $C_{16}$ alkylamine, and minor percentages of $C_{12}$ and $C_{14}$ alkylamines, or condensation products of such amines with no more than 10 moles of ethylene oxide, propylene oxide and/or butylene oxide per mole of amine. The amine is at least partially neutralized with one or more acid phosphate esters, preferably those produced by esterifying one or two hydrogen atoms of orthophosphoric acid with alkanols having 4—12 C atoms and/or alkylphenols having 4—12 C

atoms in the alkyl group, which alkanols and/or alkylphenols may be condensed with no more than 15 moles of ethylene oxide (EO), propylene oxide and/or butylene oxide per mole of alcoholic compound. Examples of suitable phosphate esters are mono- and di-2-ethylhexyl phosphate, mono- and ditridecylphosphate, mono- and di-tridecylpolyglycol ether phosphate (3 EO), mono- and di-nonylphenol-polyglycol ether phosphate (4, 10 or 17 EO) and mixtures of such phosphates.

The second component of the coating mixture according to the invention is a mineral oil which, among other functions, acts as a vehicle for the other components and together with these components produces a composition which at elevated temperature, for example, between 30 and 75°C, is a homogeneous mixture that can be sprayed hydraulically or with an air sprayer. Highly suitable are mineral lubricating oils comprising mixtures of a major proportion of paraffinic hydrocarbons and minor proportions of naphthenic and/or aromatic hydrocarbons.

The third component is a coarsely-crystalline paraffin wax comprising a mixture of paraffins having a chain length of between 18 and 36 C atoms, an average molecular weight of between 360 and 420 and a dropping point of between 50 and 60°C (Ullmanns Enzyklopädie der technischen Chemie, third Ed. (1967) Volume 18, page 273), and the fourth component is a microcrystalline paraffin wax, consisting of a mixture of paraffins having a chain length of between 40 and 55 C atoms, a molecular weight of between 580 and 700, and a dropping point of between 62 and 92°C (Ullmann, loc. cit.).

The coating mixture according to the invention is made by combining the desired quantities of the four components in any given order, followed by heating at a temperature which, depending on the mixing ratio, may range from about 30°C to about 75°C, whereby a solution is formed which, if necessary, is homogenized by stirring. After cooling the homogeneous solution to ordinary temperature, the mixture ranges from a semi-solid material to a thin paste, depending on the proportion of mineral oil in the mixture.

For coating ammonium nitrate containing fertilizer granules with the coating mixture according to the invention, the mixture is converted by heating into a homogeneous solution, which is sprayed over the granules to be coated, whilst the granules are kept in an intensely rolling motion, whereby the coating mixture sprayed over the granules is spread over the granule surfaces to form a uniform and closed coating.

The granules thus coated are cooled. Ammonium nitrate containing granules containing at least 28% N are cooled to a temperature below 50°C, and granules containing less than 28% N to a temperature below 32°C, i.e. the temperature at which ammonium nitrate of crystal modification III passes into crystal modification IV. The granules can be cooled using a stream of air with a suitable temperature, and preferably having such a low moisture content that no moisture can be absorbed on the granules. Cooling with air can be effected in a fluidized bed or in a rotary drum arranged to ensure a good contact between the stream of air and the granules.

The proportion of coating mixture applied to the granules depends on the composition, the roundness, and the surface porosity of the granules to be coated, and generally ranges between 0.005 and 0.15% by weight, preferably between 0.01 and 0.1% by weight, calculated on the non-coated granules.

As a result of the coating, the moisture absorption by the granules is drastically reduced, so that when the coated granules are stored in bulk under conditions of high humidity, at the worst a thin wet top layer or soft crust is formed. The coated granules exhibit a greatly reduced caking tendency and, owing to the pasty nature of the coating do not cause any dusting. A further advantage is that the coating mixture according to the invention can be applied to the granules in one treatment.

The coated granules according to the invention are readily dissolved in water, i.e., in less than 1 minute, and, in this, are distinguished from the so-called "slow-release" fertilizer granules, which are provided with such a coating that they are dissolved in water with a great delay, as a result of which they gradually give off their nutrients to the soil over a long period of time.

The invention is illustrated in and by the following examples.

In the tests described in the examples, the caking tendency of ammonium nitrate containing fertilizer granules was examined as follows.

The granules were stored in 50 kg bags in a compartment in which the temperature was kept at a constant value of 27°C under a pressure of 0.35 kg/cm$^2$ (a concrete block of 1000 kg exactly covered the flat side of a bag of 50 kg). After a one-month storage period, the amount of lumps (caked product) in a bag was determined by carefully putting the bag on a sieve having meshes of 1 cm, carefully cutting the bag, and carefully removing the cut bag. When the sieve was lifted, the free-flowing granules flowed through the sieve, the lumps remaining behind on the sieve were collected and weighed. The weight of the lumps was expressed as a percentage of the bag contents (50 kg). Subsequently, blocks of 7×7×5 cm were cut from the lumps, and the weight in kg under which the lump broke was measured by means of a dynamometer. This weight is called "hardness" in the examples.

Rating:
percentage of lumps
0%=free flowing
<15%=good
15—30%=moderate
f35>30%=insufficient

hardness of lumps

<1 kg=substantially free-flowing
<3 kg=good
3—5 kg=moderate caking tendency
5—10 kg=considerable caking tendency
>10 kg=hard-baked

In the coating mixtures according to the invention, in all cases a commercially available, substantially aliphatic oil was used having the following properties:

| | |
|---|---|
| specific gravity | 0.871 |
| viscosity SUS 38°C | 108 |
| SUS 99°C | 39.7 |
| carbon type | |
| aromatic C atoms | 9.5% |
| naphthenic C atoms | 23.0% |
| paraffinic C atoms | 67.5% |
| viscosity index | 94 |

The coarsely-crystalline paraffin wax used in all the tests satisfied the following specifications:

| | |
|---|---|
| melting range (DIN 51556) | 50—52°C |
| oil content (DIN 51571) | 1—2% |
| needle penetration, 25°C (DIN 51579) | 30 |
| cone penetration, 25°C (DIN 51580) | 30 |
| viscosity, 98.9°C (DIN 51562) | 3.8 centistokes |

The microcrystalline paraffin wax used in all examples satisfied the following specifications:

| | |
|---|---|
| penetration, 25°C (ASTM D-1321) | 14—19 |
| congealing point (ASTM D-51571) | 70—74°C |
| flash point (ASTM D-92) | minimum 220°C |
| colour, unfiltered (ASTM D-1500) | maximum 2.5 |

Example 1

In an industrial coating drum as described in United States patent 4,241,692, having a capacity of 50,000 kg per hour, calcium ammonium nitrate 26% N prills were coated with different quantities of the afore-described coating mixtures A and B according to the invention. The coating mixture was sprayed, at a temperature of 70°C, via one sprayer into the coating drum over the prills, which had a temperature of approximately 45°C. The average residence time of the prills in the drum was 7 minutes. The coated prills were cooled to 27—28°C with air in a fluid-bed cooler. Subsequently, the moisture absorption index (M.A. index) and the caking tendency of the granules were measured. The results are listed in Table I.

TABLE I

| Coating mixture | M.A. index* | Caking tendency lumps, % | Caking tendency hardness, kg |
|---|---|---|---|
| none | 100 | 100 | 25 |
| 0.01% A | 47 | 61 | 2 |
| 0.03% A | 28 | 18 | <1 |
| 0.05% A | 27 | 12 | <1 |
| 0.075% A | 28 | 8 | <1 |
| 0.10% A | 28 | 5 | <1 |
| 0.01% B | 51 | 63 | 1 |
| 0.03% B | 29 | 28 | 1.5 |
| 0.05% B | 28 | 18 | 1 |
| 0.075% B | 26 | 9 | <1 |
| 0.10% B | 30 | 3 | <1 |

*rel. to N.S.M. calcium ammonium nitrate 26% N=100%

Example 2

Using the procedure described in Example 1, calcium ammonium nitrate 26% N prills, calcium ammonium nitrate 27.5% N prills, and ammonium nitrate 33.5% N prills (stabilized with 1.5 to 2.0% magnesium nitrate) were coated with 0.05% by weight of the afore-described coating mixture A according to the invention. The coated calcium ammonium nitrate 26% N and 27.5% N prills were cooled to 27—28°C, and the coated AN 33.5% N prills to 35°C. The prills thus treated and prills of the same types in non-coated condition were subjected to the moisture absorption test. At the same time, their caking tendency was measured. The results are listed in Table II.

TABLE II

| Product | Coating | M.A. index % | Top layer | Caking tendency Lumps % | Caking tendency Hardness (kg) |
|---|---|---|---|---|---|
| calcium ammonium nitrate 26% N | none | 100 | hard 5 cm | 100 | 25 |
| ditto | 0.05% A | 30 | soft 0.5 cm | 12 | <1 |
| calcium ammonium nitrate 27.5% N | none | 100 | hard 5 cm | 100 | 30 |
| ditto | 0.05% A | 32 | soft 0.5 cm | 7 | <1 |
| ammonium nitrate 33.5% N | none | 125 | hard 4 cm | 0 | — |
| ditto | 0.05% A | 52 | soft 0.5 cm | 0 | — |

When the prills coated in accordance with the present invention were stored in warehouses in piles 12 m high, the prills were found to be completely free-flowing after a storage period of 1 month.

Example 3

In a rotary concrete mixer, charges of 60 kg calcium ammonium nitrate 26% N granules and ammonium nitrate 33.5% N granules (stabilized with 1.5 to 2.0% magnesium nitrate) were coated batchwise with 0.1% by weight of the afore-described coating mixture B according to the invention. The coating mixture was sprayed at a temperature of 70%C and through one sprayer into the concrete mixer over the granules, the latter having a temperature of approximately 45°C. The average residence time of the prills in the concrete mixer was approximately 7 minutes. The coated calcium ammonium nitrate 26% N granules were cooled to 27—28°C and the coated ammonium nitrate 33.5% N granules to 35°C. The granules thus coated and granules of the same types in non-coated condition were subjected to the moisture absorption test. At the same time their caking tendency was measured. The results are listed in Table III.

TABLE III

| | | | | Caking tendency | |
|---|---|---|---|---|---|
| Product | Coating | M.A. index % | Top layer | Lumps (%) | Hardness (kg) |
| calcium ammonium nitrate | none | 105 | hard 5 cm | 100 | 25 |
| ditto | 0.1% B | 34 | soft 0.5 cm | 2 | <1 |
| ammonium nitrate 33.5% N | none | 130 | hard 4 cm | 0 | — |
| ditto | 0.1% B | 56 | soft 0.5 cm | 0 | — |

Example 4

In the same way as described in Example 3, portions of calcium ammonium nitrate 26% N granules were coated batchwise in a rotary concrete mixer at a temperature of 50°C, and using a residence time of 5 minutes. In a first series of tests, the granules were coated with 0.1% by weight of one of the components of the afore-described coating mixture B. In a second series of tests, the granules were coated with 0.1% by weight of a mixture of three of the four components of coating mixture B. In a last test, the granules were coated with 0.1% by weight of coating mixture B.

The tests of the first and second series are comparative tests. The last test is in accordance with the present invention.

The results are listed in Table IV. In this table, the amine derivative of coating mixture B is designated as a, the mineral oil as b, the coarsely-crystalline paraffin wax as c, and the microcrystalline paraffin wax as d.

TABLE IV

| Test | Coating agent | M.A. index % | Caking tendency Lumps (%) | Hardness (kg) |
|---|---|---|---|---|
| 1 | a | 90 | 30 | 5 |
| 2 | c | 72 | 100 | 23 |
| 3 | d | 97 | 100 | 22 |
| 4 | mixture of<br>15 parts by wt a<br>42.5 parts by wt b<br>30.3 parts by wt c | 78 | 27 | 4 |
| 5 | mixture of<br>15 parts by wt a<br>42.5 parts by wt b<br>12.2 parts by wt d | 85 | 35 | 4 |
| 6 | mixture of<br>15 parts by wt a<br>30.3 parts by wt c<br>12.2 parts by wt d | 70 | 28 | 3 |
| 7 | mixture of<br>42.5 parts by wt b<br>30.3 parts by wt c<br>12.2 parts by wt d | 75 | 90 | 16 |
| 8 | mixture of<br>15 parts by wt a<br>42.5 parts by wt b<br>30.3 parts by wt c<br>12.2 parts by wt d | 36 | 0 | 0 |

These results show that neither the individual components of coating mixture B, nor mixtures of three of the four components of coating mixture B are capable of drastically reducing the moisture absorption of the calcium ammonium nitrate 26% N granules and to suppress the caking tendency of the granules. It is only the coating mixture according to the invention, used in test 8, which gives the desired result.

Example 5

Following the procedure described in Example 3, calcium ammonium nitrate 26% N granules and ammonium nitrate 33.5% N granules (stabilized with 1.5 to 2.0% by weight of magnesium nitrate) were coated with a coating mixture C according to the invention, which was composed as follows:

7.5% by weight of stearylamine (0 EO)

7.5% by weight of a mixture of equal quantities of weight of 2-ethylhexyl phosphate ester (0 EO) and nonylphenol-2-ethylhexyl phosphate ester (0 EO)

10.0% by weight of oleylamine (0 EO)

32.5% by weight of mineral oil

30.3% by weight of coarsely-crystalline paraffin wax

12.2% by weight of microcrystalline paraffin wax

The results are listed in Table V.

TABLE V

| Product | Coating | V.I. % | Top layer | Caking tendency Lumps (%) | Caking tendency Hardness (kg) |
|---|---|---|---|---|---|
| Calcium ammonium nitrate 26% N | none | 105 | hard 5 cm | 100 | 25 |
| ditto | 0.05% C | 36 | soft 0.5 cm | 0 | — |
| Ammonium nitrate 33.5% N | none | 130 | hard 4 cm | 0 | — |
| ditto | 0.05% C | 58 | soft 0.5 cm | 0 | — |

Example 6

A series of coating mixtures according to the invention were prepared, similarly to coating mixture A, but using in each case a different amine derivative. The amine derivatives used had been obtained as follows.

Test 1: stearylamine, condensed with 2 moles of ethylene oxide (EO) and neutralized with a mixture of 83% by weight of 2-ethylhexyl phosphate ester (0 EO) and 17% by weight of nonylphenol phosphate ester (17 EO)

Test 2: oleylamine, condensed with 2 moles EO and neutralized as in test 1.

Test 3: stearylamine, condensed with 2 moles EO and neutralized as to 50% with 2-ethylhexyl phosphate ester (0 EO) and as to 50% with a mixture of 83% by weight of 2-ethylhexyl phosphate ester (0 EO) and 17% by weight of nonylphenol phosphate ester (17 EO).

Test 4: oleylamine, condensed with 2 moles EO and neutralized as in test 3.

Test 5: stearylamine, condensed with 2 moles EO and neutralized with oleyl-cetyl phosphate ester (7 EO).

Test 6: oleylamine, condensed with 2 moles EO and neutralized as in test 5.

Test 7: stearylamine, condensed with 2 moles EO and neutralized as to 50% with 2-ethylhexyl phosphate ester (0 EO) and as to 50% with a mixture of 92% by weight of 2-ethylhexyl phosphate ester (0 EO) and 8% by weight of nonylphenol phosphate ester (17 EO).

Test 8: oleylamine, condensed with 2 moles EO and neutralized as in test 7.

Test 9: stearylamine, neutralized with 2-ethylhexyl phosphate ester (3 EO).

Test 10: oleylamine, neutralized as in test 9.

Test 11: stearylamine, condensed with 2 moles of EO and neutralized with 2-ethylhexyl phosphate ester (0 EO).

Test 12: stearylamine, condensed with 2 moles EO and neutralized with nonylphenol phosphate ester (10 EO).

Test 13: oleylamine, condensed with 2 moles EO and neutralized as in test 12.

Test 14: stearylamine, condensed with 2 moles EO and neutralized with nonylphenol phosphate ester (4 EO).

Test 15: oleylamine, condensed with 2 moles EO and neutralized as in test 14.

Test 16: stearylamine, condensed with 2 moles EO and neutralized with tridecyl phosphate ester (3 EO).

Test 17: oleylamine, condensed with 2 moles EO and neutralized as in test 16.

Test 18: stearylamine, condensed with 2 moles EO and neutralized with nonylphenol phosphate ester (5 EO).

Test 19: oleylamine, condensed with 2 moles EO and neutralized as in test 18.

Calcium ammonium nitrate 26% N prills were coated in each test, in the manner described in Example 1, with 0.1% by weight of one of the mixtures described and subsequently cooled, whereafter the moisture absorption index and the caking tendency of the coated prills were measured. In all cases a soft top layer with a thickness of approximately 0.5 cm was formed.

The measuring results are listed in Table VI.

TABLE VI

| Test | M.A. index % | Lumps (%) | Hardness (kg) |
|---|---|---|---|
| 1 | 30 | 78 | <1 |
| 2 | 30 | 6 | <1 |
| 3 | 29 | 35 | <1 |
| 4 | 32 | 25 | <1 |
| 5 | 59 | 4 | <1 |
| 6 | 53 | 6 | <1 |
| 7 | 27 | 3 | <1 |
| 8 | 42 | 83 | 8 |
| 9 | 30 | 82 | <1 |
| 10 | 31 | 31 | 2.5 |
| 11 | 31 | 48 | 2.5 |
| 12 | 41 | 89 | 1.5 |
| 13 | 43 | 100 | 1.5 |
| 14 | 30 | 4 | <1 |
| 15 | 31 | 40 | 3 |
| 16 | 34 | 17 | <1 |
| 17 | 34 | 8 | <1 |
| 18 | 31 | 22 | <1 |
| 19 | 42 | 2 | <1 |

**Claims**

1. Ammonium nitrate containing fertilizer granules, characterized in that the granules are coated with 0.005—0.15% by weight of a homogeneous mixture comprising

(a) 5—30% by weight of the product produced by at least partial neutralization of one or more amines having the following formula

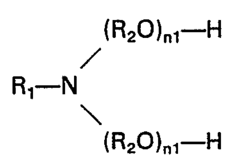

in which $R_1$ represents an alkyl or alkenyl group containing 12—20 C atoms, $R_2$ represents an alkylene group containing 2—4 C atoms, and $n_1$ represents a number having a value of from 0 to 15, with one or more acid phosphate esters,

(b) 25—70% by weight of mineral oil,

(c) 10—50% by weight of coarsely-crystalline paraffin wax, and

(d) 5—25% by weight of microcrystalline paraffin wax.

2. Ammonium nitrate containing fertilizer granules according to claim 1, characterized in that the coating mixture contains as component (a) the product produced by at least partial-neutralization of one or more amines having the formula

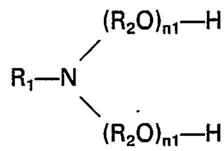

wherein $R_1$, $R_2$ and $n_1$ have the meanings defined in claim 1, with one or more acid phosphate esters having the formula

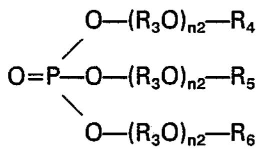

in which $R_3$ represents an alkylene group containing 2—4 C atoms, one of the substituents $R_4$, $R_5$, $R_6$ represents a hydrogen atom, one of the substituents $R_4$, $R_5$, $R_6$ represents an alkyl group containing 4—12 C atoms or an alkylaryl group containing 8—12 C atoms in the alkyl group, one of the substituents $R_4$, $R_5$, $R_6$ represents a hydrogen atom, an alkyl group containing 4—12 C atoms, or an alkylaryl group containing 8—12 C atoms in the alkyl group, and $n_2$ represents a number having a value of from 0 to 15.

3. Ammonium nitrate containing fertilizer granules according to claim 1—2, characterized in that the coating mixture contains 10—20% by weight of component (a), 35—55% by weight of component (b), 20—40% by weight of component (c), and 10—15% by weight of component (d).

4. Ammonium nitrate containing fertilizer granules according to claims 1—3, characterized in that the proportion of coating mixture is 0.01—0.1% by weight, calculated on the non-coated granules.

5. Ammonium nitrate containing fertilizer granules according to claim 4, characterized in that the proportion of coating mixture is 0.03—0.07% by weight.

6. A coating mixture as specified in claim 1 for ammonium nitrate containing fertilizer granules, characterized by comprising 5—30% by weight of component (a), 25—70% by weight of component (b), 10—50% by weight of component (c), and 5—25% by weight of component (d).

7. A coating mixture according to claim 6, characterized by comprising 10—20% by weight of component (a), 35—55% by weight of component (b), 20—40% by weight of component (c), and 10—15% by weight of component (d).

8. A composition of matter comprising components (a), (c) and (d) cn such a ratio that the addition of 25—70% by weight of component (b), calculated on the total quantity of (a), (b), (c) and (d) results in a coating mixture as claimed in claim 6.

**Patentansprüche**

1. Ammoniumnitrat enthaltende Düngemittelkörner, dadurch gekennzeichnet, daß die Körner mit 0,005—0,15 Gew.% einer homogenen Mischung überzogen sind, die enthält

(a) 5—30 Gew.% des Produktes hergestellt durch zumindest teilweises Neutralisieren eines Amins oder mehrerer Amine mit der folgenden Formel

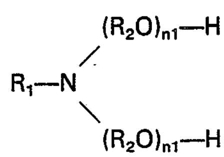

in der $R_1$ ein Alkyl oder eine Alkenylgruppe enthaltend 12—20 C Atome darstellt, $R_2$ eine Alkylengruppe enthaltend 2—4 C Atome darstellt, und $n_1$ eine Zahl mit einem Wert von 0 bis 15 darstellt, mit einem oder mehreren sauren Phosphatestern,

(b) 25—70 Gew.% Mineralöl,

(c) 10—50 Gew.% grobkristallines Paraffinwachs, und

(d) 5—25 Gew.% mikrokristallines Paraffinwachs.

2. Ammoniumnitrat enthaltende Düngemittelkörner nach Anspruch 1, dadurch gekennzeichnet, daß die überzugsmischung als Komponenten enthält

(a) das Produkt hergestellt durch zumindest teilweises Neutralisieren eines Amins oder mehrerer Amine mit der Formel

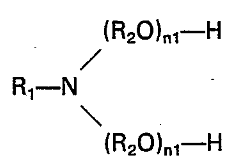

worin $R_1$, $R_2$ und $n_1$ die in Anspruch 1 definierten Bedeutungen haben, mit einem oder mehreren sauren Phosphatestern mit der Formel

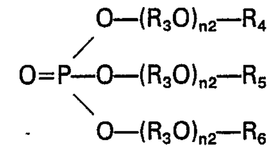

in der $R_3$ eine Alkylengruppe enthaltend 2—4 C Atome darstellt, einer der Substituenten $R_4$, $R_5$, $R_6$ ein Wasserstoffatom darstellt, einer der Substituenten $R_4$, $R_5$, $R_6$ eine Alkylgruppe enthaltend 4—12 C Atome oder eine Alkylarylgruppe enthaltend 8—12 C Atome in der Alkylgruppe darstellt, einer der Substituenten $R_4$, $R_5$, $R_6$ ein Wasserstoffatom, eine Alkylgruppe enthaltend 4—12 C Atome oder eine Alkylarylgruppe enthaltend 8—12 C Atome in der Alkylgruppe darstellt, und $n_2$ eine Zahl mit einem Wert von 0 bis 15 darstellt.

3. Ammoniumnitrat enthaltende Düngemittelkörner nach Anspruch 1—2, dadurch gekennzeichnet, daß die überzugsmischung 10—20 Gew.% der Komponente (a), 35—55 Gew.% der Komponente (b), 20—40 Gew.% der Komponente (c) und 10—15 Gew.% der Komponente (d) enthält.

4. Ammoniumnitrat enthaltende Düngemittelkörner nach Anspruch 1—3, dadurch gekennzeichnet, daß der Anteil der überzugsmischung 0,01—01 Gew.% beträgt, berechnet von den nicht überzogenen Körnern.

5. Ammoniumnitrat enthaltende Düngemittelkörner nach Anspruch 4, dadurch gekennzeichnet, daß der Anteil der überzugsmischung 0,03—0,07 Gew.% beträgt.

6. Überzugsmischung nach Anspruch 1 für Ammoniumnitrat enthaltende Düngemittelkörper, gekennzeichnet durch den Gehalt von 5—30 Gew.% der Komponente (a), 25—70 Gew.% der Komponente (b), 10—50 Gew.% der Komponente (c), und 5—25 Gew.% der Komponente (d).

7. Überzugsmischung nach Anspruch 6, gekennzeichnet durch den Gehalt von 10—20 Gew.% der Komponente (a), 35—55 Gew.% der Komponente (b), 20—40 Gew.% der Komponente (c) und 10—15 Gew.% der Komponente (d).

8. Stoffzusammensetzung enthaltend die Komponenten (a), (c) und (d) in einem solchen Verhältnis, daß die Zugabe von 25—70 Gew.% der Komponente (b), berechnet von der Gesamtmenge aus (a), (b), (c) und (d), eine Überzugsmischung nach Anspruch 6 ergibt.

## Revendications

1. Nitrate d'ammonium contenant des granules d'engrais, caractérisé en ce que les granules sont revêtus à raison de 0,005—0,15% en poids d'un mélange homogène comprenant:

(a) 5 à 30% en poids du produit procuré par la neutralisation au moins partielle de l'une ou de plusieurs amines ayant la formule suivante:

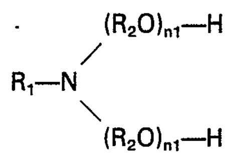

dans laquelle $R_1$ représente un groupe alkyle ou alkényle contenant de 12 à 20 atomes C, $R_2$ représente un groupe alkylène contenant de 2 à 4 atomes C et $n_1$ représente un nombre ayant une valeur allant de 0 à 15, avec un ou plusieurs esters de phosphate acide,

(b) 25 à 70% en poids d'huile minérale,

(c) 10 à 50% en poids de cire de paraffine grossièrement cristalline, et

(d) 5 à 25% en poids de cire de paraffine microcristalline.

2. Nitrate d'ammonium contenant des granules d'engrais selon la revendication 1 caractérisé en ce que le mélange de revêtement contient comme composant (a) le produit procuré par la neutralisation au moins partielle de l'une ou de plusieurs amines ayant la formule:

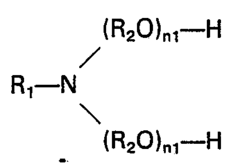

dans laquelle $R_1$, $R_2$ et $n_1$ ont les significations indiquées à la revendication 1, avec un ou plusieurs esters de phosphate acide ayant la formule:

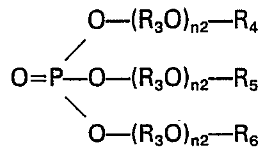

dans laquelle $R_3$ représente un groupe alkylène contenant 2 à 4 atomes C, l'un des substituants $R_4$, $R_5$, $R_6$ représente un atome d'hydrogène, un des substituants $R_4$, $R_5$, $R_6$ représente un groupe alkyle contenant 4 à 12 atomes C ou un groupe alkylaryle contenant 8 à 12 atomes C dans le groupe alkyle, l'un des substituants $R_4$, $R_5$, $R_6$ représente un atome d'hydrogène, un groupe alkyle contenant 4 à 12 atomes C, ou un groupe alkylaryle contenant 8 à 12 atomes C dans le groupe alkyle, et $n_2$ représente un nombre ayant une valeur allant de 0 à 15.

3. Nitrate d'ammonium contenant des granules d'engrais selon les revendications 1, 2 caractérisé en ce que le mélange de revêtement contient 10 à 20% en poids du composant (a), 35 à 55% en poids du composant (b), 20 à 40% en poids du composant (c), et 10 à 15% en poids du composant (d).

4. Nitrate d'ammonium contenant des granules d'engrais selon les revendications 1 à 3 caractérisé en ce que la proportion du mélange de revêtement est de 0,01 à 0,1% en poids, calculé sur les granules non revêtus.

5. Nitrate d'ammonium contenant des granules d'engrais selon la revendication 4 caractérisé en ce que la proportion du mélange de revêtement est de 0,03 à 0,07% en poids.

6. Mélange de revêtement comme spécifié à la revendication 1 pour du nitrate d'ammonium contenant des granules d'engrais, caractérisé en ce qu'il comprend 5 à 30% en poids du composant (a), 25 à 70% en poids du composant (b), 10 à 50% en poids du composant (c), et 5 à 25% en poids du composant (d).

7. Mélange de revêtement selon la revendication 6 caractérisé en ce qu'il comprend 10 à 20% en poids du composant (a), 35 à 55% en poids du composant (b), 20 à 40% en poids du composant (c), et 10 à 15% en poids du composant (d).

8. Composition de matière comprenant des composants (a), (c) et (d) dans un rapport tel que l'addition de 25 à 70% en poids du composant (b), calculée sur la quantité totale de (a), (b), (c) et (d), procure un mélange de revêtement tel que revendiqué dans la revendication 6.